# EUROPEAN PATENT SPECIFICATION

(11) **EP 1 034 840 B1**
(45) Date of publication and mention of the grant of the patent: **26.10.2005**
(21) Application number: 99109707.2
(22) Date of filing: 17.05.1999
(51) Int. Cl.: B01J 19/12, B01J 19/00, H05B 6/68

(54) **Method of controlling a chemical process heated by microwave radiation**
Verfahren zum Kontrollieren einer durch Mikrowellenbestrahlung geheizten chemischen Reaktion
Procédé pour controler une réaction chimique échauffée par radiation avec micro-ondes

(30) Priority: 08.03.1999 US 123373 P
(43) Date of publication of application: 13.09.2000
(73) Proprietor: LAUTENSCHLÄGER, Werner, 88299 Leutkirch (DE)
(72) Inventor: LAUTENSCHLÄGER, Werner, 88299 Leutkirch (DE)
(74) Representative: Rupp, Christian

(56) References cited:
- EP-A- 0 628 332
- EP-A- 0 701 387
- EP-A- 0 830 891
- EP-A- 0 916 399
- US-A- 4 484 065
- US-A- 4 584 448
- US-A- 5 174 864
- US-A- 5 837 978

## Description

This invention relates generally to the use of microwave radiation in chemical processes, and more particularly, to a method of controlling microwave assisted chemical reactions or solvent extraction processes and to a method for controlling a programmed microwave assisted heating process.

Digestions of materials in digesting liquids, such as strong acids, have been conducted in digesting systems wherein the digesting liquid was heated by microwave radiation. See, for example, European patent 0,416,759, European published specification 0,455,513 and US. Pat. No. 5,215,715. Extractions with solvents, wherein the solvent is sufficiently polar to absorb microwave radiation and convert it to heat, have also been employed as reported in Volume 371 of the Journal of Chromatography, at pages 299-306. A mixture of polar and non-polar solvents can be utilized, with the polar solvent absorbing microwave radiation and causing heating of the mixture.

Although digesting acids are corrosive, they are not usually explosive; however, many organic solvents are explosive when their vapors are mixed in a certain ratio with air. Thus, a safety problem can be encountered when conducting microwave heated extractions unless potential explosions are recognized and procedures are followed to prevent any such explosion. In U.S. Patent 5,620,659 issued April 15, 1997 in the name of Revesz, a system for preventing explosive incidents is disclosed. The system operates by detecting the presence of very small quantities of solvent vapors in exhaust air from a microwave chamber. When the solvent vapor concentration increases to explosive proportion, the source of microwave radiation, which otherwise could cause ignition of an explosive mixture of solvent vapor and air in the microwave chamber, is shut down. Alternatively the entire electrical system of the digesting apparatus is shut down in response to such detection. To be safe, such shutdowns occur when the content of solvent vapor in air is less than the lowest explosive limit. Thus, according to the teachings of Revesz, early detection of any leak in the system or of any rupture of a safety diaphragm on the extracting vessel is essential. The purpose of the rupture diaphragm is to prevent explosive failure of the extracting vessel due to excess pressure that might be developed within while the extracting solvent is heated.

European patent specification 0,455,513 discloses such a rupture diaphragm in a digesting system. Further, U.S. patent 5,620,659 teaches the presence of a collecting container for collecting any vented vapor and liquid from a digesting container that has blown its rupture diaphragm. Though the system taught by Revesz is useful in preventing explosions, such a system is not useful in controlling an extraction process. From the teachings of Revesz, it is clear that once failure of an extracting vessel has occurred, monitoring for explosive chemicals is necessary. Commonly, when using microwave radiation for extraction, a plurality of vessels is placed within a microwave oven for simultaneous extraction. When a rupture diaphragm on a single vessel ruptures, the escaping solvent vapors may result in shutting down the system. Unfortunately, such a result affects all vessels and samples within the device. As such, it is not a desirable outcome. Further, when an extraction process is progressing, the rupturing of a rupture diaphragm results in an open topped vessel where a closed top vessel was desired. This open top often renders a resulting extraction unsuitable for analysis. Therefore, though a catastrophic failure such as an explosion is averted, it is only at the cost of the reactions in progress.

In U.S. patent 5,382,414 issued on January 17, 1995 in the name of Lautenschläger a resealable venting vessel cover is disclosed. Such a vessel cover obviates a need for a rupture disc by releasing gas from a vessel when pressure within the vessel is excessive and resealing the vessel when the pressure within the vessel is again below the threshold pressure. The released gas may accumulate in a collection chamber when present or in the microwave chamber itself when no collection chamber is used. The gas is vented through a venting system. The use of the resealable venting vessel cover, allows for continued extraction, digestion or hydrolysis of the sample contained within the vessel with only nominal loss of vessel contents.

In U.S. Patent 5,447,077 issued Sept. 5, 1995 to Lautenschläger a device for microwave radiation heated evaporation is disclosed. Such a device employs vessels with outlets therein through which evaporated chemicals are discharged and an inlet through which air or other gases are fed into the vessels. It would be advantageous to provide a system for controlling a process heated by microwave radiation such as extraction, digestion or hydrolysis in order to improve the results of the process. It would also be advantageous to control a process heated by microwave radiation in order to avert explosive situations or potentially explosive situations without stopping the process.

The control of microwave assisted heating processes is commonly carried out by monitoring the temperature and/or the pressure of the sample vessels. In comparison to conventional heating techniques microwave assisted heating processes can be adjusted without time delay through an instant power level adjustment of the microwave source. Nevertheless, the control of microwave heated processes depends on factors such as the amount of sample and the number and the type of samples. It is not always possible to account for those factors without difficulties. For example, an automatic control of the pressure and the temperature in closed vessel systems is virtually impossible to accomplish if the vessels are not completely sealed. Thus, a reliable quality control for analytical methods is not possible. Further problems with prior art microwave assisted heating techniques occur with parameter limits, i.e. a control over the heating process is only possible when a predetermined step, such as a predetermined pressure or a predetermined temperature, is reached. Until this predetermined step is reached, there is no control over the heating process and spontaneous changes, such as an exothermic event, are neither recognized nor are they controlled.

It is well known to have chronologically controlled microwave devices. A process involving several process stages each requiring a predetermined microwave radiation energy level and each requiring a predetermined length of time is entered as a plurality of chronological stages. For each stage a time and energy level/temperature or pressure are entered. When the process is begun, each stage, except a first stage, is executed following a previous stage. Thus, a plurality of stages is preprogrammed and the process stages are performed one after another. From a scientific perspective, chronological control is optimal since it enhances repeatability and consistency of results. Unfortunately, when using such a programmed process, it is difficult to effect changes to the process in dependence upon information gathered during processing. Furthermore, it is only possible to control such a programmed process after a first preprogrammed stage is reached.

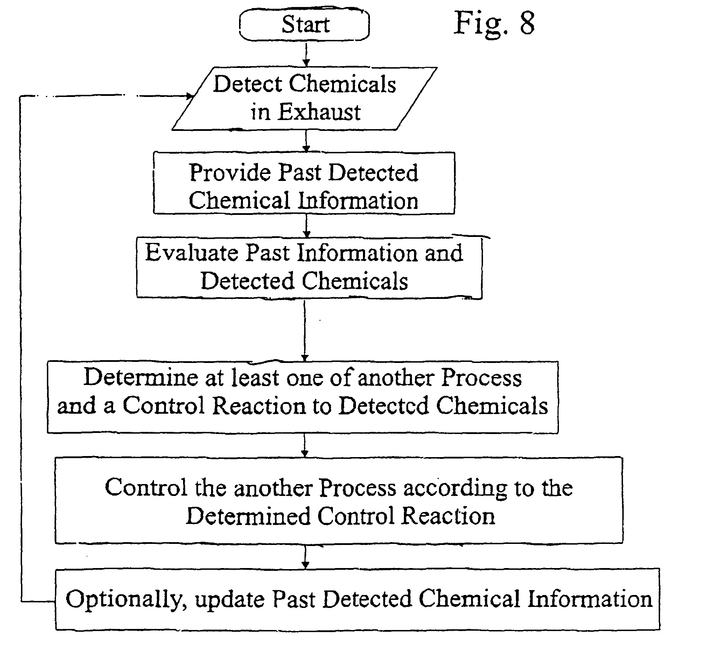

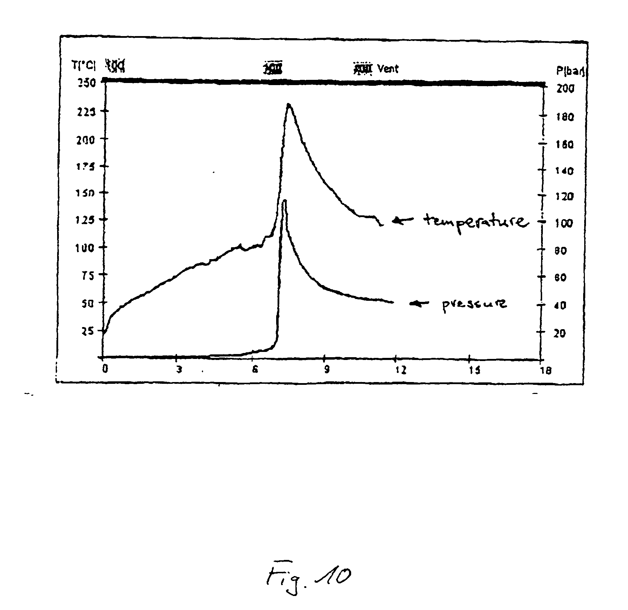

Today microwave assisted heating processes are carried out by programming one or more power steps by varying the microwave power with time, for example 250 Watts for 5 minutes and then 400 Watts for 10 minutes. It is of interest for the experimenter to start with a relatively low power in order to slow down the reaction. The experimenter is setting different parameter limits, e.g. a temperature limit of 210°C and a power limit of 250 Watts. The application of microwave power starts the heating process and the sample starts to heat. However, Fig. 8 shows an uncontrolled spontaneous reaction caused by an excessive sample amount. The curve on top shows the temperature vs. time and the curve at the bottom shows the pressure vs. time. In this case, the reaction started below the first point, 210°C, no control over the heating process is possible until this first parameter limit of 210°C is reached. After the sudden increase in pressure to 115 bar the vessels are vented briefly. Simultaneously, the temperature curve shows a sudden rise to over 240°C. Fig. 10 shows the important point of this known control method in that the microwave assisted heating process is only controlled when the first parameter limit is reached. Once the parameter limit is reached, such as temperature or pressure, the sensor system controls the microwave heating. Alternatively, the PID (proportional-integral-differential) controls microwave heating once the parameter limit is nearly reached.

EP 0 830 891 A1 shows a microwave assisted chemical process following a preset pressure time profile.

US 5,837,978 shows a microwave assisted chemical process using a control system, controlling the temperature of the workpiece according to a predetermined temperature versus time schedule.

It is an object of the present invention to permanently control microwave assisted heating processes.

It is a further object of the invention to adjust the microwave power during microwave assisted heating processes in accordance to sample weight, the number of samples or vessels, and the amount of reagents, i.e. the volume of reagents.

It is a specific object of the invention to control/avoid spontaneous reactions during microwave assisted heating processes before the first parameter limit is reached.

This object is achieved by the features of the independant claims. The dependent claims develop further the central idea of the present invention.

Exemplary embodiments of the invention will now be described in conjunction with the following drawings, in which:
Fig. 1 is a drawing of a microwave oven having an open door and sample vessels within as known in the prior art;
Fig. 2 is a drawing of a microwave oven having an open door and sample vessels within according to the invention;
Fig. 3 is a drawing of a microwave chamber containing a vessel having a resealable venting vessel cover;
Fig. 4 is a drawing of a cracked vessel with a sealed vessel cover within a microwave chamber;
Fig. 5 is a simplified diagram of a sensor comprising a plurality of integrated circuits for sensing each of a plurality of different chemicals;
Fig. 6 is a simplified block diagram of an analysis circuit;
Fig. 7 is a simplified flow diagram of a method according to the invention.
Fig. 8 is a simplified flow diagram of another method according to the invention wherein a second other process is controlled based on chemical concentrations detected; and
Fig. 9 is a simplified diagram of a microwave oven having two separate exhaust systems.
Fig. 10 shows a graph of temperature and pressure vs. time indicative of an uncontrolled spontaneous reaction;
Fig. 11 shows a schematic presentation of a vessel having a chemically resistant insert, a pressure resistant housing, and a lid 216 mounted in a rotor segment;
Fig. 12a shows a more detailed presentation of Fig. 9 in which the cylindrical member is shown to have a spring 302 disposed therein;
Fig. 12b shows a linear function between a force and a distance for sealing and/or calibrating the vessel with a predetermined pressure;
Fig. 13 shows a programmed temperature-time profile used for a digestion of a synthetic PET material over a time period of 35 minutes;
Fig. 14 shows a microwave oven having a QP sensor disposed in the microwave chamber and/or the outlet tube;
Fig. 15 shows a diagram representative of all measurement parameters and hence providing a quality document of the microwave assisted heating process;
Fig. 16 shows two exothermic events within a temperature-time profile originating from two different amounts of sample and having a much increased temperature at the exothermic event;
Fig. 17 shows an exothermic event in a traditionally controlled heating processes wherein the control of the heating process sets in too late, i.e. after the exothermic event took place;

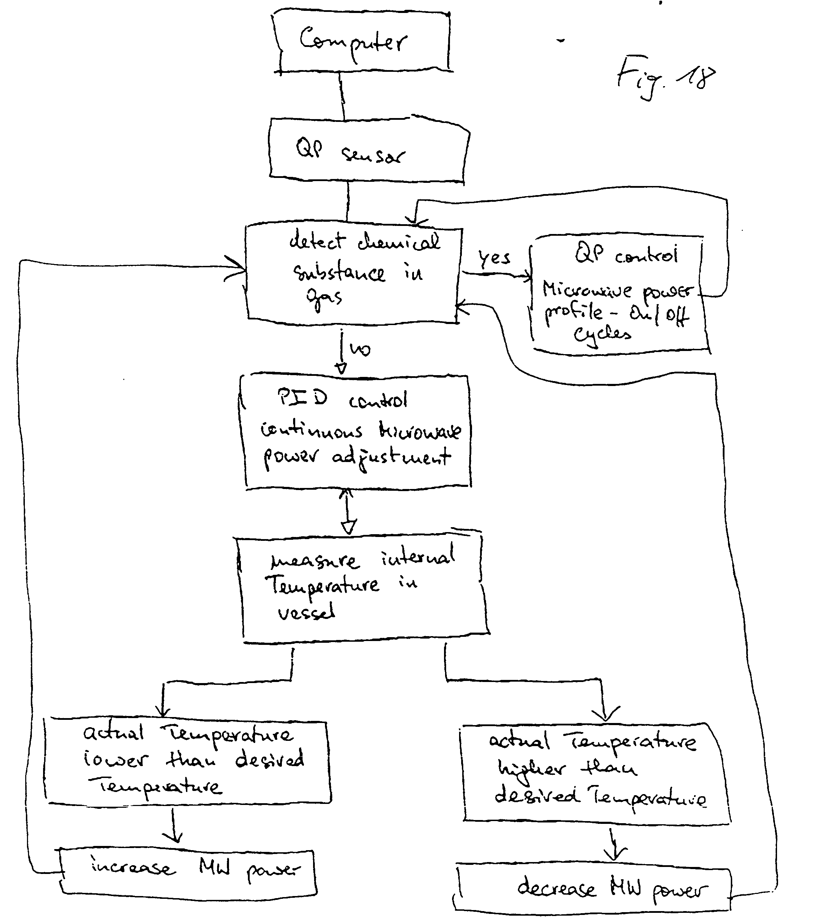

Fig. 18 is a simplified flow diagram according to the invention; and

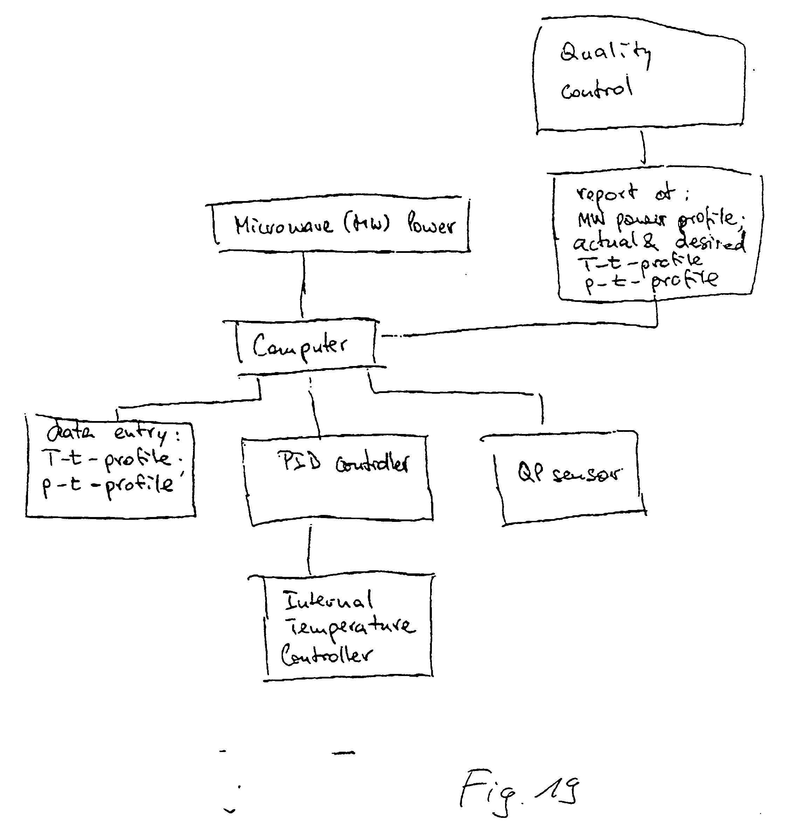

Fig. 19 is a simplified flow diagram according to the invention.

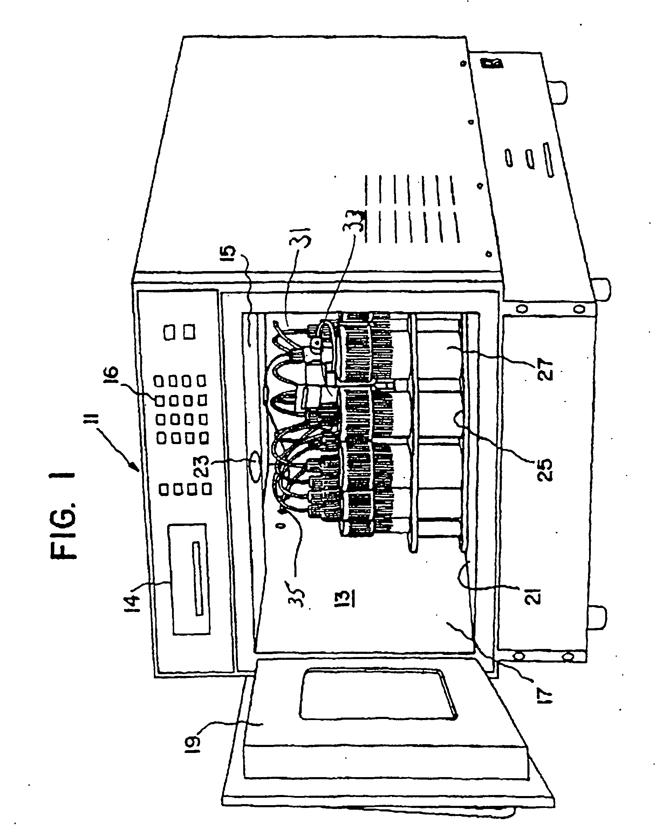

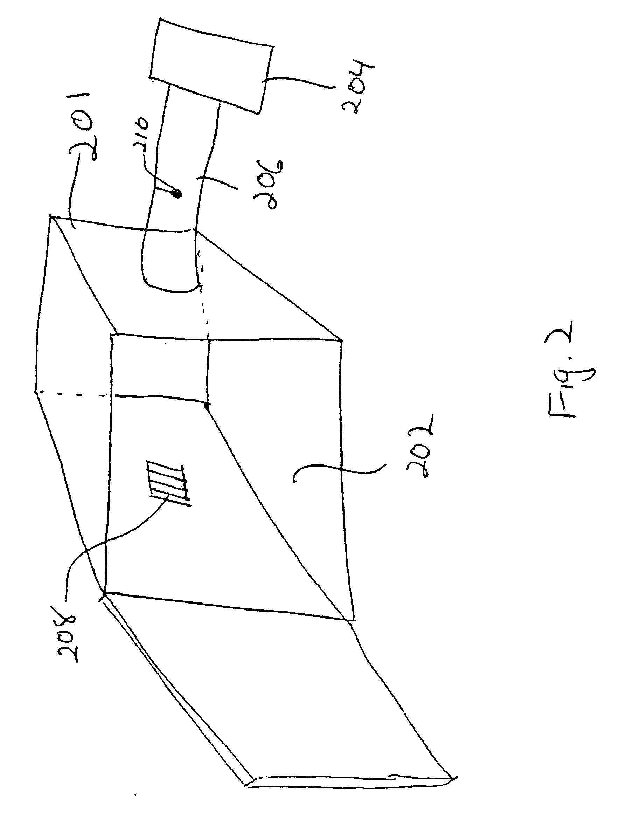

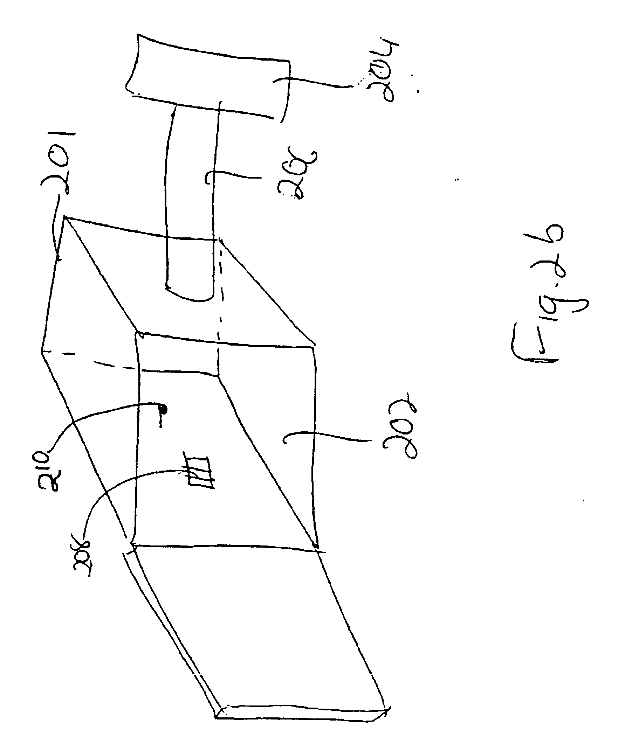

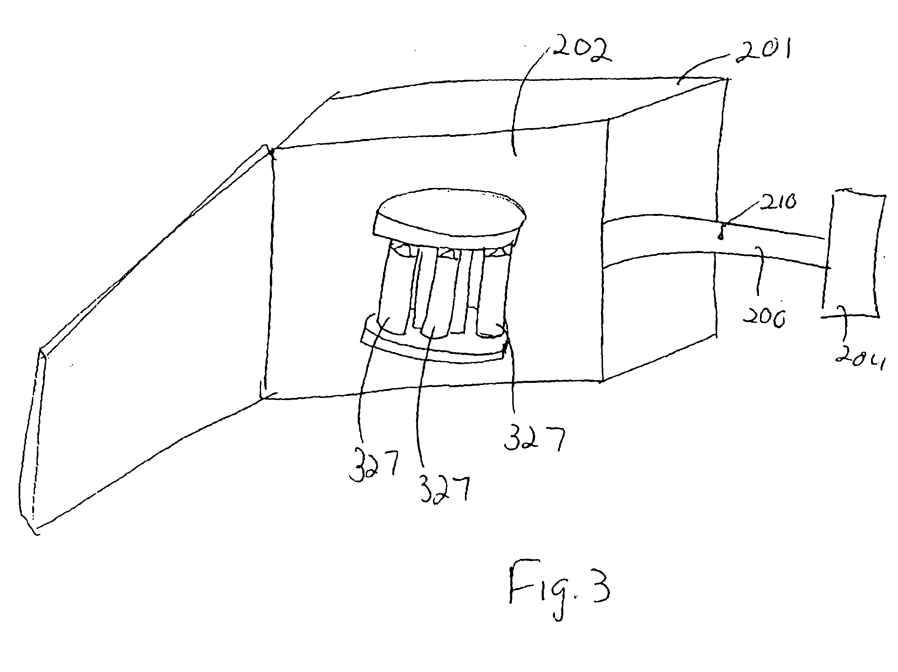

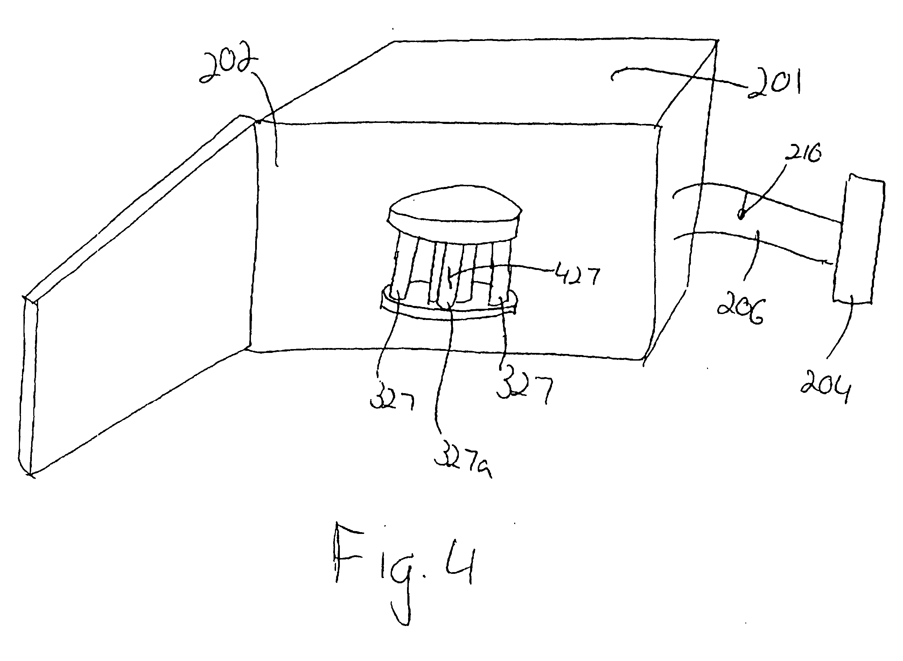

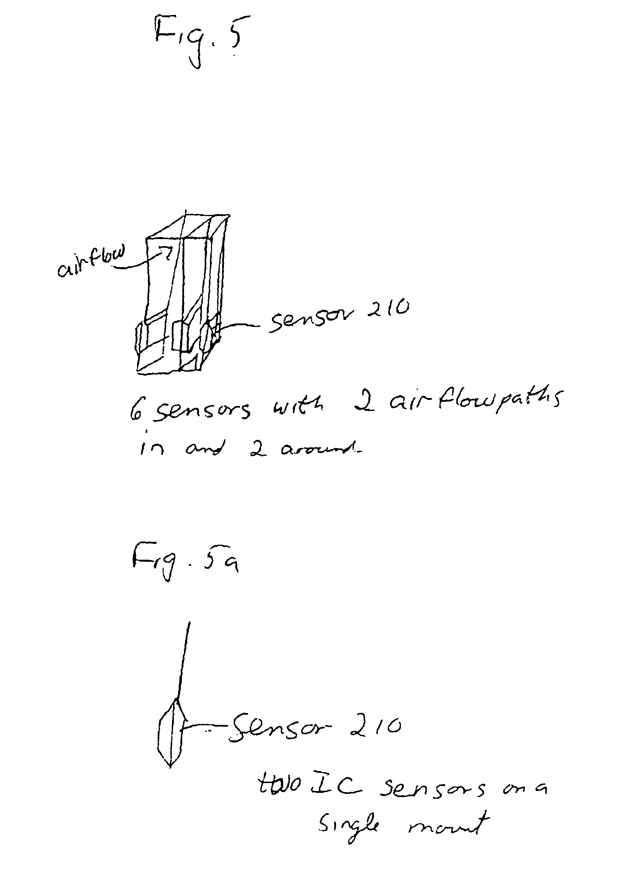

Referring to Fig. 1 a prior art microwave chamber is shown containing a plurality of vessels and a collection chamber. The microwave extraction apparatus or system 11 comprises a chamber 13 which includes a ceiling 15, three side walls 17, a door 19 and a floor 21, with the ceiling having mounted therein a light or lamp 23. A source of microwave radiation, such as a magnetron (not illustrated) directs microwave radiation into the chamber. In the chamber is mounted a turntable 25 on which are positioned a plurality of extraction containers 27.

In Fig. 1, a view of extraction vessels on the turntable in a microwave chamber is shown. The extraction vessels are connected to a collection container wherein any discharges from the extraction vessels, including solvent vapor and entrained liquid, are collected. The collection container head space is connected to solvent detecting and magnetron controlling means external the microwave chamber. This connection allows solvent vapor within the collection container head space to pass from the collection chamber to the solvent detecting means. Extraction containers 27, all of which include rupture diaphragms, each connect to tubes 31, which carry discharged vapor and any entrained material from containers whose rupture diaphragms have burst due to the containers having reached their pre-set maximum design pressure to collection container 33. The headspace in container 33 is connected by another tube 35 to an exhaust duct that contains a vapor detector. In operation such a device monitors vapor concentration to shut down the magnetron in case of sufficient solvent vapor drawn from the collection container through the tube 35 into the exhaust, possibly because of a vapor surge.

It is well known to have chronologically controlled microwave devices. A process involving several process stages each requiring a predetermined microwave radiation energy level and each requiring a predetermined length of time is entered as a plurality of chronological stages. For each stage a time and energy level/temperature are entered. When the process is begun, each stage, except a first stage, is executed following a previous stage. Thus, a plurality of stages is preprogrammed and the process stages are performed one after another. From a scientific perspective, chronological control is optimal since it enhances repeatability and consistency of results. Unfortunately, when using such a programmed process, it is difficult to effect changes to the process in dependence upon information gathered during processing. According to the invention, a method of utilizing chemical data gathered during process execution to modify process parameters and thereby, increase microwave apparatus flexibility is disclosed.

Referring to Fig. 2, a microwave oven is shown. The microwave oven 201 comprises chamber 202, fan 204, exhaust in the form of an outlet tube 206, and a microwave radiation generator in the form of a magnetron 208. Within the outlet tube 206 is disposed a sensor 210 for sensing chemical content of exhaust gases. The fan 204 draws the exhaust gases from the microwave chamber 202. An output signal from the sensor 210 comprises chemical information in the form of chemical concentration information for analysis to determine progress of a current microwave heated chemical process. This determination is then used to adjust aspects of system control.

Referring to Fig. 2b, a microwave oven is shown. The microwave oven 201 comprises chamber 202, fan 204, exhaust in the form of an outlet tube 206, and a microwave radiation generator in the form of a magnetron 208. Within the chamber 202 is disposed a sensor 210 for sensing chemical content of exhaust gases. The fan 204 draws the exhaust gases from the microwave chamber 202. An output signal from the sensor 210 comprises chemical information in the form of chemical concentrations for analysis to determine progress of a current microwave heated chemical process. This determination is then used to adjust aspects of system control. Of course, many other configurations are employable with a method according to the invention.

Referring to Fig. 3, a microwave chamber 202 containing a vessel 327 having a resealable venting vessel cover is shown. It has been found that vessel covers as described in U.S. Patent 5,368,820 hereby incorporated herein by reference, often seat during the first few minutes of an extraction process. Sometimes, when the microwave heating begins, vessel covers are not completely seated on a mating vessel surface. With application of heat and resulting pressure, these vessel covers each move a small amount, thereby adjusting their placement to a correctly seated placement. During this stage, minute quantities of reaction gas are known to escape from such vessels. This quantity of gas, when it escapes, is detected by the sensor 210 and a signal from the sensor dependent upon detected chemical concentrations is analyzed.

In a typical application of the present invention, a microwave heating apparatus is provided with a ventilation system drawing air through the microwave chamber and out an exhaust. The sensor 210 measures gas concentrations within this moving stream of air. Therefore, in such an embodiment, variations in gas concentrations and gas concentrations over known periods of time are monitored. When a concentration of predetermined chemicals detected by the sensor 210 within the gas is reduced over that previously detected, the process is adjusted as appropriate for seated vessel covers. For example, microwave heat energy is modified, ventilation rate is adjusted, stirring is initiated, stirring is terminated, stirring rate is adjusted, or so forth. When the process for seated and unseated vessel covers is identical, no adjustment is performed.

Alternatively, a microwave energy level is increased in order to begin a process in earnest only after vessel cover seating has occurred. Alternatively, a microwave radiation energy level is decreased once seating has occurred to allow a process to proceed more slowly. Further alternatively, the process is modified when chemical concentrations indicative of an improperly seated vessel cover are detected. Thus, depending on a chemical process and in accordance with known chemical principles, the microwave radiation energy level and/or another aspect of a chemical process is adjusted in dependence upon chemical sensor feedback. When using a vessel cover constructed of a material that softens with application of heat, it has been found that seating is improved significantly once the material is softened - heated. For such covers when an unseated vessel cover is detected, microwave radiation energy is reduced to allow heat from the previously applied power to warm the vessel cover and thereby better seat the cover. Once the cover is seated, the process proceeds as programmed. Of course, for different vessel covers and different chemical processes, different corrective actions may be applied.

Referring again to Fig. 3, it is known that some gases diffuse through vessel walls during a microwave heated chemical extraction, digestion or hydrolysis process. This phenomenon is significant under predetermined conditions of, for example, process temperature, pressure or time. A sensor 210 detects concentrations of chemicals within gases passing by the sensor. Since some chemical species are more likely to diffuse than others, a time resolved signal from the chemical sensor 210 indicates whether the detected chemicals within the gas likely result from diffusion or from another source such as an unseated vessel cover. When diffusion is determined to be a cause of sensed chemical concentrations within the outlet tube 206, microwave radiation energy levels are adjusted to maintain diffusion in a desired range. Alternatively, microwave radiation energy levels are adjusted to return detected diffusion to a predetermined range. The range is determined based on the chemical process performed. Of course, similar process control is achieved when the chemical sensor 210 is within the microwave chamber 202 as shown in Fig. 2b. For clarity, since some chemical species are more likely to diffuse than others, a presence of higher than normal concentrations of those chemicals indicates that diffusion is likely occurring. By determining, in advance, information relating to diffusion rates of different chemicals, diffusion signatures are achieved and it is sometimes possible to distinguish between chemical concentrations resulting from diffusion and chemical concentrations within a same quantity of gas that result from other causes.

Referring to Fig. 4, a cracked vessel 327a with a sealed vessel cover is shown in a microwave chamber. The crack 427 is in the form of a minute fissure in the side wall of the vessel. When the vessel cracks, an amount of gas escapes through the crack. This gas is drawn through the outlet tube 206 past the sensor 210 where it is detected. An amount of gas detected indicates a size of an opening in a vessel. When the opening is small, it appears similar to venting of a vessel cover during venting; however, unless the fissure is resealable, the venting of gases through the fissure continues over a lengthy period of time. For example, when a vessel undergoes catastrophic failure, the gases within the vessel are drawn through the outlet tube and the sensor detects chemical concentrations within the gases. It may be that sufficient explosive chemicals exist to necessitate a system shut down as taught by Revesz. Alternatively, fanning is increased substantially in order to diffuse the gases more quickly. Starting fans 204b near the outlet port of the outlet tube 206 increases fanning. The additional fans disperse the gas quickly and effectively. Alternatively, the fan 204 is turned at a faster rate to increase airflow through the microwave chamber and thereby vent the gases more quickly. Alternatively, inert gases are caused to flow into the microwave chamber in order to displace oxygen from the chamber and thereby suppress the potential for ignition or explosion of explosive gases. Of course, other means of venting the microwave chamber more quickly are also available.

When a resealable venting vessel cover exhausts gas, the gas is drawn past the sensor 210. The gas is detected and the chemical process is adapted in response to the sensed chemical concentrations. For example, venting of the microwave chamber is increased while microwave radiation energy is reduced to prevent further venting of sample vessels. Of course other adjustments are possible and these are determined in dependence upon chemical processes occurring in each vessel. By analyzing the time resolved change in chemical concentrations within gases detected, it is possible to distinguish between venting of a vessel, chemical diffusion through the vessel wall, or incomplete vessel cover seating. This allows for detection and/or monitoring of three separate phenomena simultaneously and for controlling an ongoing process somewhat independently for each of the three phenomena detected. In order to determine chemical concentration signatures for each of said phenomena, experimentation with the phenomena is performed for a predetermined chemical process and results are used for analysis of chemical concentrations detected when performing same or similar chemical processes. The sensor comprises one of a single sensor for detecting a single chemical substance, a plurality of sensors for detecting a plurality of chemical substances, or a single sensor for detecting a plurality of chemical substances.

Referring to Fig. 5, a sensor is shown. The sensor is in the form of a plurality of integrated circuits each for detecting a different chemical and/or a different chemical concentration. Sensor 501 is an NOx sensor for detecting NOx within the exhaust fumes. Sensors for detecting NOx are known in the art of chemical sensor design and are available - for example, sensor type NAP-11AN, from MLS GmbH, Mikrowellen - Labor - Systeme, Leutkirch, Germany. Sensor 503 is a sensor for a group of organic molecules that are potentially explosive. Other sensors detect other chemicals such as hydrofluoric acid, etc. Each sensor provides a signal based on a composition of a gas in which the sensor is placed. The sensor shown in Fig. 5 is assembled in a fashion such that air drawn through the outlet tube 206 passes around each integrated circuit. Signals from each integrated circuit are provided to an analysis circuit.

Referring to Fig. 5a, another embodiment of a sensor is shown wherein two integrated circuits are mounted on opposing sides of a probe. Of course, when a sensor is disposed on a wall of the outlet tube 206 or of the microwave chamber 202, a probe is not necessary.

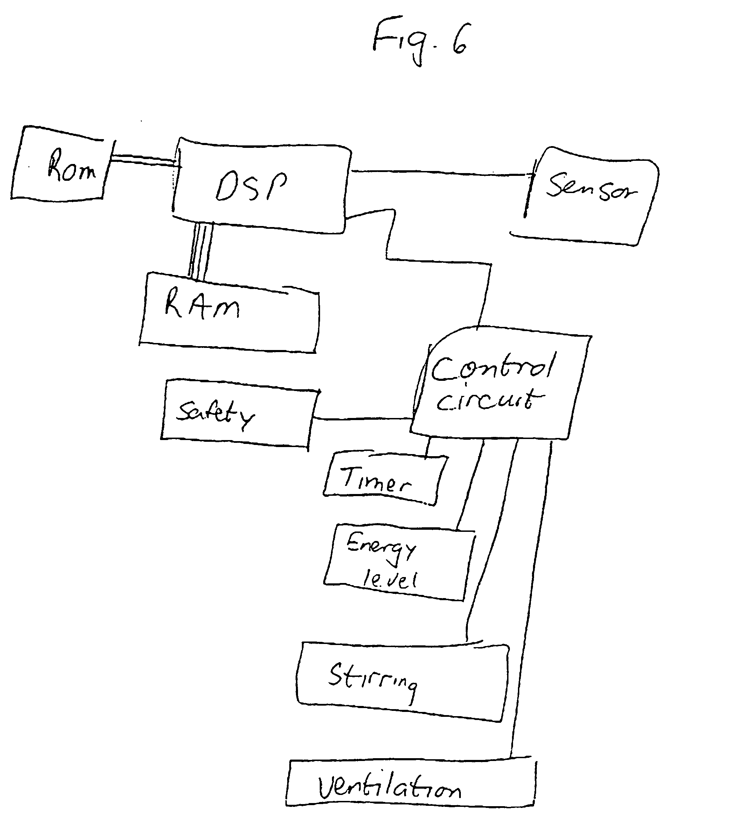

Referring to Fig. 6, a block diagram of an analysis circuit is shown. The analysis circuit comprises a processor in the form of a digital signal processor (DSP) for receiving signals from the sensors 210 and for determining a concentration of some chemical substances proximate to the sensors 210. The concentration of predetermined gases and other information are used to determine process adjustments to maintain safety and where possible viability of a current chemical process. Only in extreme circumstances is the entire system shut down.

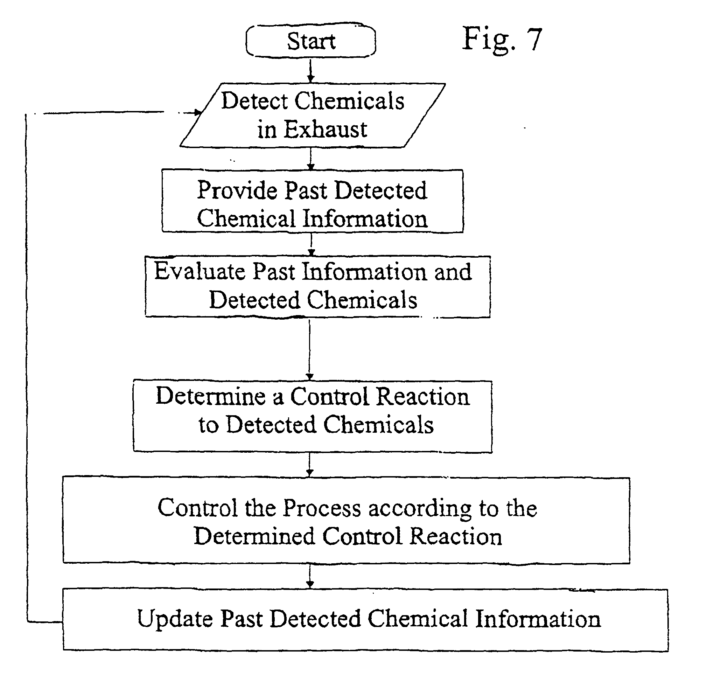

Referring to Fig. 7, a flow diagram of a method according to the invention is shown. Chemical concentrations are detected using a sensor within the microwave chamber 202 or within the microwave exhaust 206. The detected chemical information is provided to a processor in the form of a DSP. The information is analyzed along with past detected chemical information, past control responses, and stored data in the form of anticipated outcomes of past control responses. Based on the analysis, a control response is determined and the chemical process is controlled based on the determined control response. Specific control responses are outlined above and below. Of course, a combination of control responses is employed when determined beneficial. In an embodiment employing a combination of control responses, one of a neural network and an expert system is used to determine optimal control responses for detected chemical concentrations. The design and implementation of such a control system is well known in the art of computer science and more particularly in those areas of computer science focused on design and implementation of the above mentioned systems.

In an embodiment, stirring speed is modified according to the determined control response. When stirring is used to assist a process, the stirring is commenced once the process has progressed sufficiently to ensure that vessel covers are well seated. Alternatively, stirring speeds are increased or decreased in accordance with detected chemical concentrations. Depending on a chemical process within a sample vessel, gases formed within the vessel and therefore emitted by diffusion, venting, unseated caps, etc. are reduced or increased through application of increased stirring. Sometimes, gas production is unaffected by stirring. When gas emissions are affected by stirring, controlling stirring allows for an increase or reduction in gas within sample vessels during a process. For example when stirring increases gas formation, it is not desirable to stir until vessel covers are well seated. Therefore, a stirring mechanism is disabled or very slight stirring occurs until vessel cover seating is determined to be acceptable.

In an embodiment, chemical concentrations are analyzed to determine chemical profiles for assessing causes of predetermined portions of chemical concentrations detected within the gas. For example, when a first chemical diffuses more than a second, a profile of the diffusion ratio allows a predetermined algorithm to process chemical concentrations and determine what portion results from venting of vessel covers and what portion results from diffusion. These results form a chemical profile in the form of chemical information, concentration information, and sources of each concentration or of portions of the concentrations. Of course, chemical profiles may incorporate other data for determining control responses.

According to another embodiment, microwave radiation energy is modified according to the determined control response. For example, when a profile of detected chemicals is similar to a chemical profile indicative of an unseated vessel cover, the power provided to the magnetron is reduced and, therefore, the microwave radiation energy level is reduced. Subsequently, when the profile of detected chemicals is similar to a chemical profile indicative of well seated vessel covers, the power level is returned to a normal level.

According to another embodiment, process time or times for different aspects of a process are modified in order to control said process. The times are, for example, extended when insufficient diffusion occurs or are foreshortened when excessive vessel venting occurs. Preferably, process time modification and microwave radiation energy modification are used together to effect controlled processes achieving substantially similar results to those desired by an operator. In a common digestion process, a sample within a vessel is heated to a predetermined temperature and maintained about that temperature for a predetermined period of time. Using a method according to the invention, the heating of the sample is effected in a more controlled manner until it reaches the predetermined temperature. Effects of diffusion and unseated vessel covers are minimized when that is desirable. The process control functions do not effect the repeatability or effectiveness of the overall process. Though the term chemical concentration is used throughout this disclosure, a more suitable phrase is time resolved concentration or the change in concentration as a function of time.

It is apparent to those of skill in the art that time resolved concentration is determined by comparing a detected concentration to a previously detected concentration. For example, an ill fitted vessel cover results in a rising concentration with slope dependent on the applied power and reactions going on inside the vessel; the ill fitted vessel cover is usually only of concern early on in a process. Diffusion through vessel walls results in a low and slowly rising concentration . Venting results in a detected chemical concentration spike that is narrow in time; the concentration rises rapidly when venting occurs and falls off rapidly since the vessel cover reseals. A cracked, broken or exploded vessel likely results in a large detected concentration spike that settles down to a new, higher baseline that decreases over time as the process progresses and exhausting of fumes within the microwave chamber continues. Molecules of the form NOx are easily detected. This is desirable because of the corrosiveness of the nitric acid used in aggressive sample digestions and the potential for damage to equipment and injury to personnel. Some chemicals are monitored because they are carcinogenic; some chemicals are extremely toxic even to the point of being lethal such as hydrofluoric acid and its fumes. Typical digestion acids are hydrochloric acid, nitric acid, hydrofluoric acid, phosphoric acid, hydrogen peroxide, perchloric acid. Toxicity, hazardous exposure, corrosiveness to equipment, and potentially lethal exposure are all important issues in controlling a process and, according to the invention, are monitored and prevented when possible; however, for control of a process, it is important to continue the process in the form of digestion, extraction, and/or hydrolysis to its conclusion when feasible.

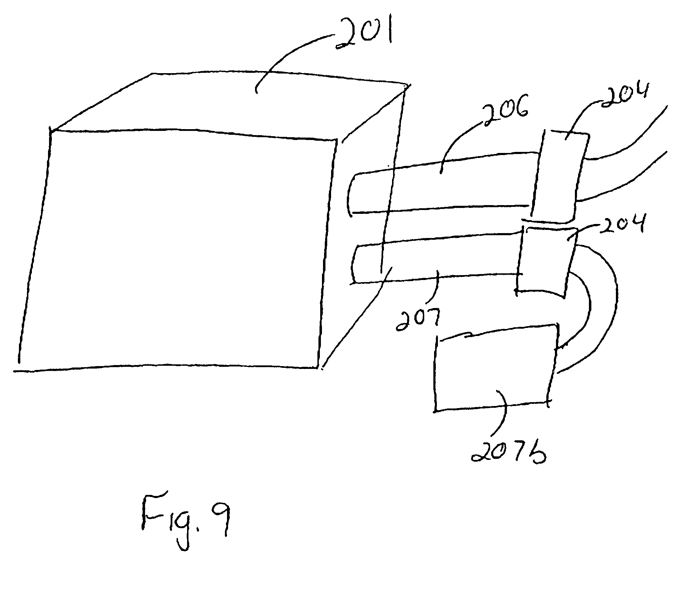

In an embodiment shown in Fig. 8, instead of affecting process control, the sensor signal is used to affect another process - for example to enhance process safety. This is achieved by providing safety processes for initiation upon detection of predetermined chemical concentrations. For example, should a vessel catastrophically fail - explode - the contents are dispersed within the microwave chamber. When the contents are hazardous in the form of toxic chemicals or explosive chemicals, upon detection of a high concentration of the chemicals, neutralizing chemicals or inert gases are provided at an inlet to the microwave chamber in order to dilute and/or neutralize the hazardous chemicals. Since such neutralizing process or agent is sometimes very costly, it is advantageous to employ same only when a hazard occurs. Another safety process according to the invention involves a second other exhaust for providing chemical neutralization as shown in Fig. 9. When detected hazardous chemical concentrations exceed predetermined thresholds, the first exhaust 206 is substantially sealed and the gas including the hazardous chemicals is directed through the second other exhaust 207 to a system 207b for neutralization or appropriate storage. This effectively, improves safety in processing of hazardous chemicals.

Alternatively, instead of a single sensor within a microwave apparatus, a plurality of sensors are used to detect gas concentration information.

The detected concentrations are analyzed to produce gas flow related information for adjusting a process, venting, safety processes, stirring, etc. according to the invention. The use of a plurality of chemical sensors allows for more accurate estimation of chemical sources and causes of chemical emissions. Also, the use of a plurality of sensors within the microwave chamber and within the exhaust enhances control options and fault tolerance.

In a further embodiment, the method of controlling a process disclosed herein is used during microwave radiation heated evaporation. The evaporation is performed, for example, in a device such as that disclosed in U.S. Patent 5,447,077. A chemical sensor disposed so as to detect chemical concentrations of evaporated gases is used to monitor an ongoing evaporation process. For example, chemicals, which evaporate above but very near the desired evaporation process temperature, are monitored and when an increase in concentration is detected, the process temperature is reduced to prevent loss of those chemicals. Of course, monitoring of an evaporation process is also useful for implementing safety processes, preventing catastrophic failures, recording data regarding process progression and execution, and for controlling the evaporation process in numerous other ways. As is evident to those of skill in the art, monitoring of an evaporation process is possible when a sensor is disposed within a flow of evaporated gases. For example, a sensor disposed at an outlet to a sample vessel or at an evaporation exhaust to an evaporator apparatus detects chemical concentrations within exhausted gases. Of course, chemical sensors disposed outside of the evaporation apparatus allow for detection of leaks in the evaporation apparatus, diffusion, catastrophic failure, etc.

Spontaneous reactions, such as exothermic reactions, occur with sudden and unexpected temperature and pressure changes. In order to control these types of reactions it is necessary to recognize them in the process of development or else it is difficult to control them. Only the use of sensitive thermocouples in the immediate vicinity of the sample allows to detect small temperature changes indicative of the beginning of a spontaneous reaction.

In order to monitor and control microwave assisted heating processes the following parameters need consideration: a number of sample or samples, an amount of sample or samples, and a type of sample or samples. The microwave assisted heating process is then controlled in dependence upon these parameters. A control mechanism is needed which compensates for all of the parameters automatically. The type of samples, such as the percentage of organic contents or carbonates, determines the production of gases during a digestion procedure. The type of chemicals, e.g. sulfuric acid, nitric acid, hydrochloric acid, hydrofluoric acid, result in an additional production of gases and determine the rate of the reaction. The amount of sample influences the increase in temperature and pressure during a reaction in a vessel. The number of sample vessels influences how much microwave power needs to be applied to heat the vessels to a certain temperature, i.e. the more vessels are present the more microwave power needs to be applied to heat the vessels to a certain temperature.

In the following a method and an apparatus for continuously monitoring and controlling microwave assisted heating processes is described. Depending on the type of sensor employed control is achieved for example for the tenth of a second.

In a further embodiment of the invention a temperature-time profile or a pressure-time profile is crated and stored in a processor. It is appreciated that such a profile is drawn directly on a screen of a computer terminal stored by the processor in communication with the computer terminal. The processor then tries to recreate the stored profile in response to the measured values obtained from the sensors disposed in the microwave cavity, in the microwave exhaust system or in the vessels within the microwave cavity. The method and the apparatus in accordance with the present invention permanently compares a desired value from the stored temperature-time profile or the pressure-time profile with an actual value obtained through the sensors. This means that the disclosed method achieves permanent parameter control through continuous comparison of the desired temperature or pressure value with the actual temperature or pressure value at a given time. The method and the apparatus of the instant invention is capable of recognizing a spontaneous reaction in the status nascendi, i.e. in the moment of development or origin. A smallest deviation from the desired profile will instantly adjust the microwave power and compensate for a spontaneous reaction. It is appreciated that it is possible to alter the stored temperature-time profile or the pressure-time profile as the experiment progresses and re-store such a changed profile in the processor for controlling the further progress of the microwave assisted heating process.

Once the temperature-time profile or the pressure-time profile is started the processor follows the profile through continuos comparison of actual and desired values and controls the heating process through continuous adjustment of the microwave power in dependence upon the measurements obtained from the sensors. Even a small deviation from the profile is noted immediately and the microwave power is adjusted without time delay. Only with this technology is it possible to recognize spontaneous reactions in the development stage and compensate for such a spontaneous reaction by adjusting the microwave power. This requires the use of fast and sensitive temperature sensors in the sample, such as an ATC-CE-400 and an ATC-FO-350 sensor. The ATC-CE-400 and the ATC-FO-350 sensor are resistant against aggressive chemicals and high temperature through a coating. These type of sensors have a fast response and thus allow real time control of microwave assisted heating processes.

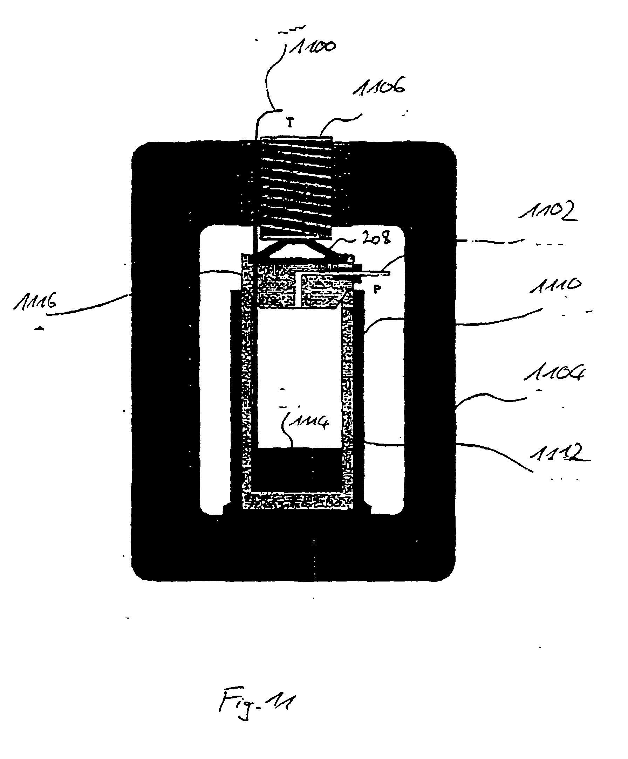

Fig. 11 shows a schematic presentation of a vessel having a chemically resistant insert 1112, a pressure resistant housing 1110, and a lid 1116. The vessel is mounted in a rotor segment 1104. Fig. 11 further shows how the temperature and the pressure are measured in the vessel having a sample 1114 disposed therein. The temperature sensor 1100, shown to the left in the vessel reaches through the lid 1116 into the sample 1114 through a polytetrafluoroethylene (PTFE) coated ceramic tube. Thus, the temperature sensor recognizes immediately even small temperature changes of the sample. Alternatively, the pressure is monitored through pressure sensor 1102 if a pressure-time profile is programmed. The lid 1116 is tensioned with a certain pressure rating against the vessel through a thrust piece 1108 and a cylindrical member 1106. If the pressure with which the lid is tensioned against the vessel is exceeded the lid lifts off temporarily to release some of the pressure. The use of an apparatus for performing chemical and physical pressure reactions comprising a thrust piece 1108 is disclosed by Werner Lautenschläger in U.S. Patent No. 5,382,414, U.S. Patent No. 5,368,820, and U.S. Patent No. 5,270,010 which are incorporated herein by reference.

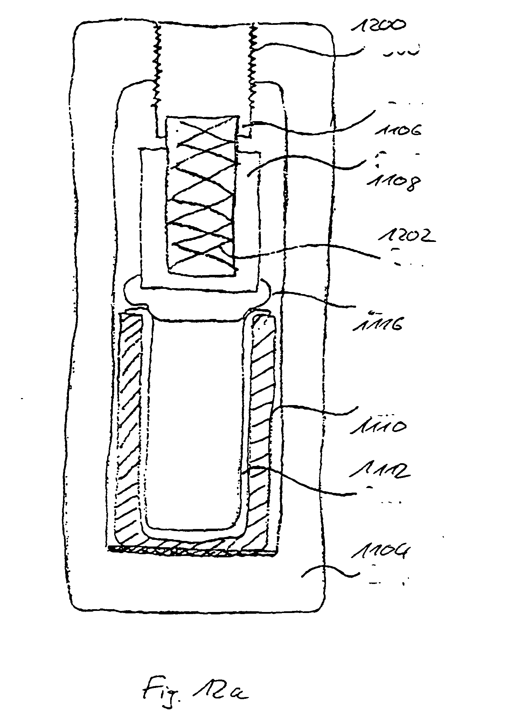

The cylindrical member 1106 has a spring 1202 disposed therein, shown in more detail in Fig. 12a. The spring 1202 is pressed against the thrust piece 1108 and the vessel having an insert 1112 and a pressure resistant housing 1110. The cylindrical member 1106 is mounted to the rotor segment 1104 by means of a thread 1200. Depending upon the tension a seal of the vessel for a certain pressure rating is reached. When the sample 1114 within the vessel is heated the pressure inside this closed vessel increases. In the case that the pressure inside the vessel exceeds the pressure rating the lid moves up and releases the excess pressure through compression of the spring 1202. Because of a linear function between a force and a distance the vessel is sealed or calibrated with a predetermined pressure. This is shown in Fig. 12b. The calibrated pressure is controlled either by the force necessary to seal the vessel or by the distance, i.e. the number of rotations of the cylindrical member 1106. This calibration of the vessel with a predetermined pressure can also be automated, for example by measuring the current necessary to seal the vessel. The current needed for sealing the vessel depends upon the torque and/or the number of turns necessary to seal the vessel with the predetermined pressure. This results in a double calibration of the vessels, i.e. that the pressure vessels are autocalibrated. This technique is disclosed in US patent number 5,981,924 in the name of Werner Lautenschläger and is incorporated herein by reference.

Chemical reactions are determined by their reaction temperature. Higher temperatures are desired in order for a chemical reaction to proceed faster. When carrying out a chemical reaction in the vessel an exact pressure seal is important in order to reach a high temperature without the risk of destroying the vessel. In case the pressure inside the vessel exceeds the calibrated pressure it is desirable to release the excess pressure fast for a safe operation. The safety of a calibrated pressure vessel is determined by the area/surface available for venting, i.e. if the entire lid is temporarily lifted off, the excess pressure is safely released. In prior art vessels having a rupture disk and a narrow vent in the lid the vapors take a much longer time to escape.

The generation of a temperature-time profile or a pressure-time profile is carried out by entering the respective information in a processor. The desired profile of temperature vs. time or pressure vs. time is displayed on a screen of a monitor connected to the processor. However, it is advantageous to chose a temperature vs. time profile over a pressure vs. time profile since a change in pressure only occurs once the boiling point of a sample within the vessel is reached. Thus the control with a parameter, i.e. the pressure, having a value of zero for a certain period of time is not preferred but possible within the scope of the invention.

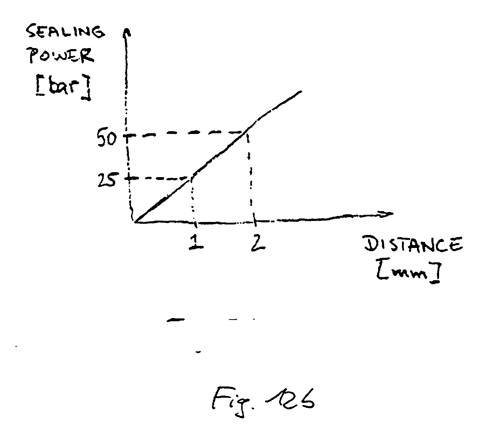

Fig. 13 shows a programmed temperature-time profile used for a digestion of a synthetic PET material over a time period of 35 minutes. The microwave is programmed to heat a PET sample in a mixture of nitric acid and hydrogen peroxide within 10 minutes to 230°C. The reaction temperature of 230°C is maintained for 7 minutes. Then the reaction temperature is increased within 4 minutes to 250°C and maintained for 14 minutes. The programming of such a heating process takes only very little time. The described temperature-time profile is monitored and controlled by the internal temperature measurement using the thermocouple 1100 and the sensor described along with figures 1 to 9 and hereinafter called the Quality-Pressure sensor or QP sensor.

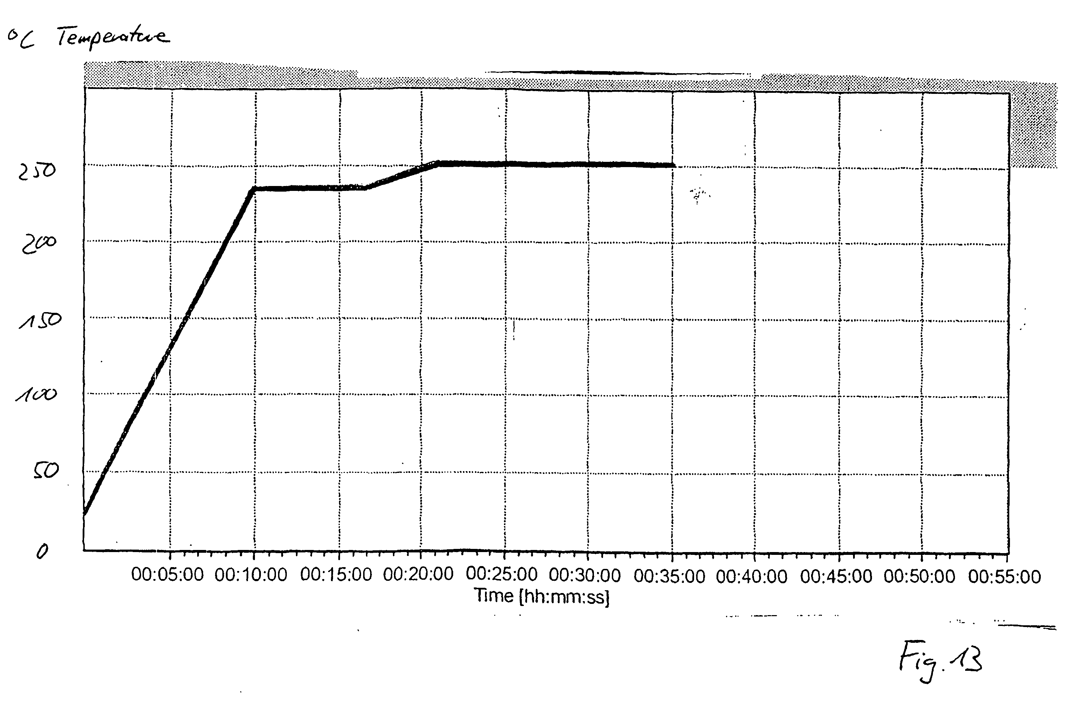

Referring to Fig. 14, a microwave oven having such a QP sensor disposed therein is shown. The microwave oven 1401 comprises chamber 1402, fan 1404, exhaust in the form of an outlet tube 1406, and a microwave radiation generator in the form of a magnetron 1408. Within the outlet tube 1406 is disposed a QP sensor 1410a for sensing chemical content of exhaust gases. Alternatively the QP sensor 1410b is disposed within the chamber 1402 for sensing chemical content of exhaust gases. The fan 1404 draws the exhaust gases from the microwave chamber 1402. An output signal from the QP sensor 1410a and/or 1410b comprises chemical information in the form of chemical concentration information. The QP sensor 1410a and/or 1410b monitors and controls during the entire microwave assisted heating process all vessels inside the microwave chamber to determine whether the vessels remained properly sealed for the duration of the experiment and also the internal pressure of the vessel. The QP sensor is a sensor and a analysis circuit as describe above with reference to figures 1 to 9.

The measured data are stored in the processor and displayed on the screen of the monitor of the processor. Additional control, such as the temperature of the vessel through a contact-less infrared measurement and a pressure measurement for following a reaction in a vessel, is possible in a simultaneous manner.

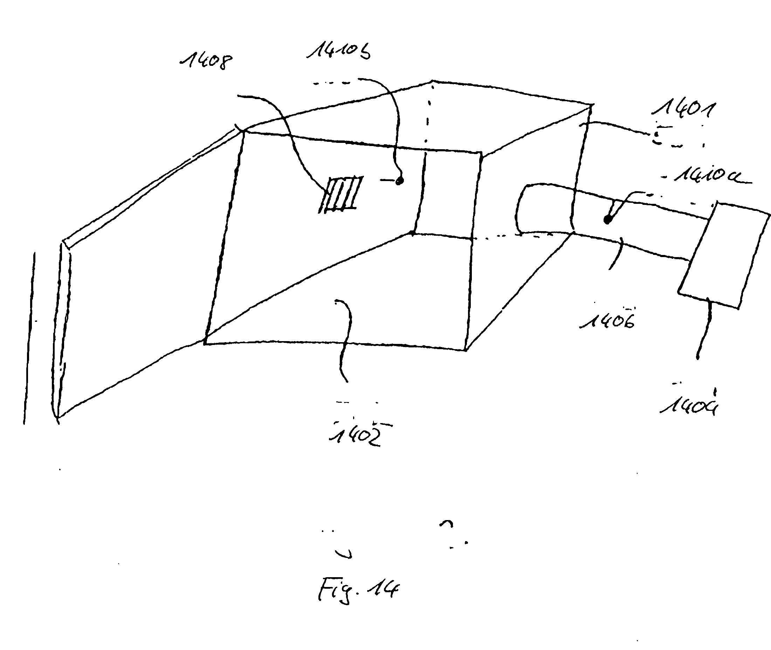

Fig. 15 shows a diagram representative of all measurement parameters and thus provides a quality document of the microwave assisted heating process. The presentation of the parameters shows how the method and the apparatus in accordance with the invention follows the desired temperature-time profile. After approximately 10 minutes Fig 15 shows a small deviation from the desired profile. This is due to preset limitation of the microwave power to a maximum value of 400 Watt. This means that a preset maximum microwave power of 500 Watt would have resulted in a substantial overlap between the desired profile and the actual profile. For a duration of 23 minutes all of the vessels were sealed and no leakage has occurred and the diffusion of gases from the acids used for the digestion of samples, such as acid vapors and NOx, was below a limit of the QP sensor. Just after 23 minutes in Fig. 15 the desired temperature-time profile shows a temperature deviation of 10-12°C from the actual temperature-time profile. The simultaneous graphical presentation of the microwave power on the same screen, see bottom of Fig.15, allows the experimenter instantly to see which sensor control the microwave assisted heating process. For example, during the first 23 minutes of the heating process the graph for the microwave power shows a continuous adjustment of the microwave power which indicates that the internal temperature sensor controls the heating process. However, after approximately 23 minutes the graph of the microwave power shows on-and-off phases. On-and-off phases indicate that the QP sensor controls the microwave assisted heating process. Immediately after a small increase in acid vapors or NOx concentration is sensed by the QP sensor, the QP sensor system takes control of the heating process. This is indicative of a pressure release through the lid system described above. Thus the calibrated internal pressure of 50 bar is maintained inside the vessel and sample losses as a result of an increased boiling point are avoided. At those periods of time when the actual profile deviates from the desired profile the microwave power is adjusted through the QP sensor by means of on-and-off cycles. Once the vessel and the lid warm up again the expansion of the vessel and the lid as a result of an increased temperature seals the vessel again which is supported by the temperature-time profile showing an increase in temperature. Once the desired and the actual temperature-time profile coincide again the internal temperature control automatically takes control of the heating process through continuous microwave power adjustment but no on-and-off cycles.

The simultaneous control of all reaction parameters, such as temperature of the sample and reaction gases with the QP sensor allow a complete documentation and control of microwave assisted heating processes. At the same time it is controlled whether the vessel remains sealed throughout the heating process and whether the internal pressure is exceeding its calibrated pressure value. In the event a problem, such as a deviation of the actual temperature from the desired temperature occurs or the pressure exceeds the calibrated internal pressure of the vessel, the problem is automatically compensated for through the fast and responsive sensor system. This is graphically presented and documented in the same diagram as the temperature-time profile and provides essential information to the experimenter, such as whether the heating process proceeded according to the desired temperature-time profile or whether venting as indicated by the QP sensor has resulted in sample loss.

The control of microwave assisted heating processes in accordance with the invention has a plurality of advantages. A desired temperature-time profile is recreated by the microwave system in combination with the sensors, internal temperature sensor and QP sensor and the spring loaded vessel being calibrated with a predetermined internal pressure. The method and the apparatus in accordance with the invention advantageously adjusts the necessary microwave power for the heating process according to the number of samples and the amount of sample automatically. The desired and the actual profile are displayed in the same diagram for easy reference and comparison. All reaction parameters are displayed in real time. In accordance with the invention a microwave assisted heating process can be adjusted while the experiment progresses. The permanent microwave power adjustment allows to follow a desired profile independently of the type of sample.

The method and the apparatus in accordance with the present invention is only possible using microwave assisted heating. With traditional heating methods one has to enter power steps with time and the system starts controlling the heating process when an event or parameter limit is reached. Microwave heating penetrates the vessel and only heats the solution in the vessel whereas the vessel stays cold. In microwave assisted heating processes measurement parameter, such as temperature differences or pressure differences are measured without delay, particularly when the sample is stirred. This means that microwave or HF (high frequency) heating has no delay in comparison to traditional heating techniques. For example, when in an autoclave having a stainless steel mantle, the heating elements are turned off, the container is still hot and gives off heat. Contrarily, microwave heating is instant on or off, i.e. if the microwave power is turned on heat is provided and if the microwave power is turned off no heating occurs.

In accordance with the invention two sensor systems are employed to control the microwave assisted heating process. One sensor system is the PID controller (Proportional - Integral - Differential) obtaining temperature measurements from a thermocouple disposed within the sample inside the vessel. If the PID controller controls the heating process it means that the microwave energy is permanently adjusted to follow a desired temperature-time profile, i.e. if a desired value is far away from the actual value the microwave power is increased whereas if the desired value is close to curve the microwave power to control the heating process is decreased.

Once the sample heats up its capability of absorbing microwaves is reduced and more energy has to be applied to the sample in the vessel. It is noted that the dielectric loss is a function of the temperature in liquids, i.e. the higher the temperature of a sample the more it loses its dipole properties.

If the QP sensor detects gases from a venting vessel a two-point control, i.e. on and off control, of the microwave assisted heating process sets in. This means that when the curve shows on-and-off cycles that there has been a deviation from the desired profile. Thus from the temperature-time profile presented in Fig. 15 it is apparent whether the microwave heating process heating was controlled by PID controller or the QP sensor. Once a desired temperature is reached and to be maintained only little microwave power is necessary to compensate for the loss of temperature. In an ideal case the power profile only shows PID control and no On-and-Off control as indicated from the switching of the microwave power between zero and maximum power.

For example, in a situation where there was too much sample in the vessel so that the microwave power is not sufficient to heat the sample to the desired value it is apparent from the temperature-time profile that the desired profile and the actual profile did not coincide. However, the microwave power profile shows regardless only PID control. Thus, the experimenter is in the position to tell whether the vessel was leaking or not. If the microwave power profile is only indicative of PID control, e.g. the microwave power profile is flat, there was no leak.

In accordance with the present invention it is possible to monitor various quality control parameters and all GLP (Good Laboratory Praxis) properties are displayed in one diagram on one screen. An experimenter can instantly tell from the screen display whether a certain temperature was reached, whether the reaction took place, and whether any sample loss from the vessel was incurred or whether the sample stayed in the vessel.

The QP sensor technique works in combination with the reversible spring loaded vessel system for pressure regulation inside a vessel. It is an advantage of the present invention that reactions which would have led to an explosion using traditional techniques are controlled. From the temperature-time profile it is recognizable what event took place. For example, in Fig. 15 when the QP sensor controlled the heating process, the temperature-time profile is indicative of venting taking place. In the case of a diffusion process the temperature-time profile displays a stronger, steeper temperature loss than for the ventilation process.

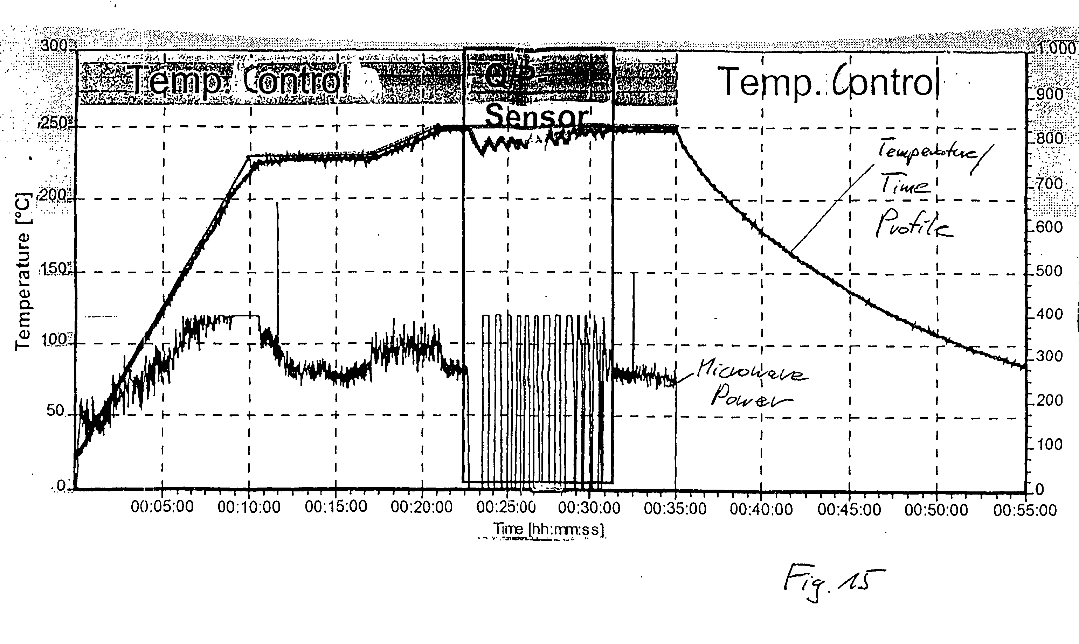

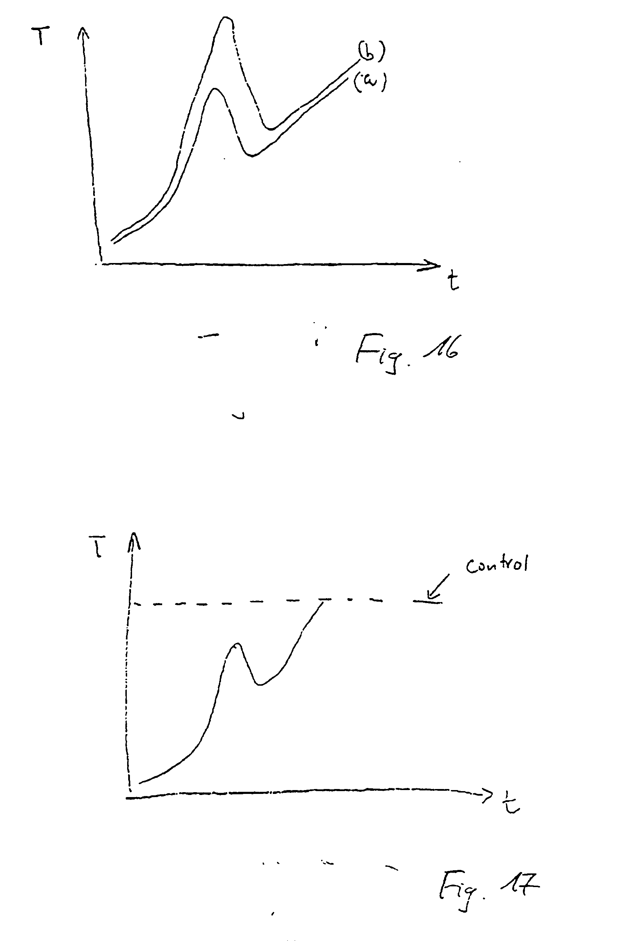

Because of the immediate control of the heating process with the employed sensor systems exothermic reactions can be recognized already in the process of development by a sudden increase in temperature or pressure. Fig. 16 shows two exothermic events having a much increased temperature at the exothermic event. The exothermic event presented in curve (a) is due to a sample amount of 0.5g whereas the exothermic event presented in curve (b) is due to a sample amount of 1.0g. Thus, Fig. 16 shows that the larger the sample amount is the larger is the increase in temperature at exothermic event and hence the experimenter can obtain information regarding a certain sample amount from the temperature-time profile. In traditionally controlled heating processes the control sets in too late, i.e. after the exothermic event took place. This is shown in Fig. 17. Exothermic or endothermic reactions can not be controlled in the prior art. Therefore, the present invention provides a better and safer reaction control in the microwave assisted heating processes. Furthermore, the method and the apparatus of the instant invention allow larger sample amounts to be used when compared to prior art methods.

### List of reference signs:

### Figure 1:

- 11: system
- 13: chamber
- 15: ceiling
- 17: side walls
- 19: door
- 21: floor
- 23: lamp
- 25: turntable
- 27: container
- 31: tubes
- 33: collection container
- 35: tube

### Figure 2.

- 201: microwave oven
- 202: chamber
- 204: fan
- 206: outlet tube
- 208: magnetron
- 210: sensor

### Figure 3:

- 327: vessel

### Figure 4:

- 327a: cracked vessel
- 427: crack

### Figure 5:

- 501: NOx sensor
- 503: sensor

### Figure 11:

- 1100: temperature sensor
- 1102: pressure sensor
- 1104: rotor segment
- 1106: cylindrical member
- 1108: thrust piece
- 1110: housing
- 1112: insert
- 1114: sample
- 1116: lid

### Figure 12:

- 1200: thread
- 1202: spring

### Figure 14:

- 1401: microwave oven
- 1402: chamber
- 1404: fan
- 1406: outlet tube
- 1410a,b: QP sensor

## Claims

1. A method for controlling a programmed microwave assisted heating process comprising the steps of
(a) producing one of a temperature-time curve and a pressure-time curve, said temperature-time curve and said pressure-time curve are stored in a processor for controlling the microwave assisted heating process;
(b) providing microwave power to a microwave cavity;
(c) sensing a first signal in a vessel within the microwave cavity at a first time and providing the first signal to the processor, said first signal being one of a temperature and a pressure;
(d) starting the temperature-time profile or the pressure-time profile and following up the profile trough continuous comparison of actual and desired value and controlling the heating process through continuous adjustment of the MW power through the processor dependent from the measurements obtained from the sensors; further comprising the step of
(e) sensing a chemical substance within the microwave cavity and terming microwave power source to at least one of "on" and "off" to being it into alignment with one of said temperature-time curve and pressure-time curve.

2. A method for controlling a programmed microwave assisted heating process as defined in Claim 1 wherein the one of said temperature-time curve and said pressure-time curve comprises a non-constant function.

3. A method for controlling a programmed microwave assisted heating process as defined in Claim 1 or 2 wherein the one of said temperature-time curve and said pressure-time curve comprises a continuous curve from a first value to a second other value each point between the first value and the second other value having an associated time and an associated value.

4. A method as defined in anyone of Claims 1 to 3 wherein a same one of temperature and pressure is maintained for a period of time by adjusting the microwave power to maintain the one of temperature and pressure within a vessel absence turning on and off microwave power source.

5. A method as defined in anyone of Claims 1 to 4 wherein a transition from one of temperature and pressure to another second different one of temperature and pressure is performed over a period of time by adjusting the microwave power to smoothly transition the one of temperature and pressure within a vessel absence turning on and off microwave power source.

6. A microwave system for controlling a microwave assisted heating process in a microwave cavity comprising:
(a) a *processor* for producing and storing one of a temperature-time curve and a pressure-time curve;
(b) means for providing microwave power to a microwave cavity;
(c) a *sensor* for sensing one of temperature and pressure in a vessel within the microwave cavity;
(d) means for sensing a chemical substance within gases.of a heated chemical process in the microwave cavity;
(e) a *controller* for following up the profile through continuous comparison of actual and desired value and controlling the heating process through continuous adjustment of the MW power through the processor depending on the measurements obtained from the sensor and for turning "on" or "off" the MW power when the chemical substance within gases of a heated chemical process is detected by the means for sensing the chemical substance.

## Patentansprüche

1. Verfahren zum Steuern eines programmierten, Mikrowellen-gestützten Heizprozesses, umfassend die Schritte:
(a) Erstellen einer von Temperatur/Zeit-Kurve und Druck/Zeit-Kurve, wobei Temperatur/Zeit-Kurve und Druck/Zeit-Kurve in einem Prozessor zur Steuerung des Mikrowellen-gestützten Heizprozesses gespeichert werden;
(b) Bereitstellen von Mikrowellenleistung an eine Mikrowellenkammer;
(c) Messen eines ersten Signals in einem Gefäß innerhalb der Mikrowellenkammer zu einem ersten Zeitpunkt und Bereitstellen des ersten Signals dem Prozessor, wobei das erste Signal eines von Temperatur oder Druck ist;
(d) Starten des Temperatur/Zeit-Profils oder des Druck/Zeit-Profils und Verfolgen des Profils durch kontinuierlichen Vergleich von Ist- und Sollwert und Regeln des Heizprozesses durch kontinuierliche Anpassung der MW-Leistung durch den Prozessor abhängig von den vom Sensor erhaltenen Messungen, weiterhin umfassend den Schritt
(e) Messen einer chemischen Substanz innerhalb der Mikrowellenkammer und Schalten der Mikrowellen-Leistungsquelle auf zumindest eines von "Ein" und "Aus", um sie zu der Temperatur/Zeit-Kurve oder der Druck/Zeit-Kurve auszurichten.

2. Verfahren zum Steuern eines programmierten, Mikrowellen-gestützten Heizprozesses gemäß Anspruch 1, wobei die eine von Temperatur/Zeit-Kurve und Druck/Zeit-Kurve eine nichtkonstante Funktion umfasst.

3. Verfahren zum Steuern eines programmierten, Mikrowellen-gestützten Heizprozesses gemäß Anspruch 1 oder 2, wobei die eine von Temperatur/Zeit-Kurve und Druck/Zeit-Kurve eine kontinuierliche Kurve von einem ersten Wert bis zu einem zweiten, anderen Wert umfasst, wobei jeder Punkt zwischen dem ersten Wert und dem zweiten Wert eine zugehörige Zeit und einen zugehörigen Wert aufweist.

4. Verfahren gemäß einem der Ansprüche 1 bis 3, wobei eine gleiche Temperatur oder ein gleicher Druck über einen Zeitraum aufrechterhalten wird, indem die Mikrowellenleistung so eingestellt wird, dass Druck bzw. Temperatur innerhalb eines Gefäßes ohne Ein- und Ausschalten der Mikrowellenstromquelle aufrecht erhalten werden.

5. Verfahren gemäß einem der Ansprüche 1 bis 4, wobei ein Übergang von einem von Temperatur und Druck zu einer zweiten anderen Temperatur bzw. einem zweiten anderen Druck über einen Zeitraum durchgeführt wird, indem die Mikrowellenleistung zum sanften Übergehen von Temperatur bzw. Druck innerhalb eines Gefäßes ohne Ein- und Ausschalten der Mikrowellenstromquelle eingestellt wird.

6. Mikrowellensystem zum Steuern eines Mikrowellen-gestützten Prozesses in einer Mikrowellenkammer, umfassend:
(a) einen Prozessor zum Erstellen und Speichern einer von Temperatur/Zeit-Kurve und Druck/Zeit-Kurve ;
(b) Mittel zum Bereitstellen von Mikrowellenleistung an eine Mikrowellenkammer;
(c) einen Sensor zum Messen von einem von Temperatur und Druck in einem Gefäß innerhalb der Mikrowellenkammer ;
(d) Mittel zum Messen einer chemischen Substanz in Gasen eines beheizten chemischen Prozesses in der Mikrowellenkammer ;
(e) eine Steuerung zum Einhalten des Profils durch kontinuierlichen Vergleich von Ist- und Sollwert und Regeln des Heizprozesses durch kontinuierliche Einstellung der Mikrowellenleistung durch den Prozessor abhängig von den Messungen, die vom Sensor erhalten worden sind und zum "Ein-" und "Aus-"schalten des MW-Stroms, wenn die chemische Substanz in Gasen eines beheizten chemischen Prozesses durch das Mittel zum Messen der chemischen Substanz detektiert wird.

## Revendications

1. Méthode de régulation d'un procédé de chauffage programmé assisté par micro-ondes, comprenant les étapes consistant à
(a) produire l'une parmi une courbe de température en fonction du temps et une courbe de pression en fonction du temps, ladite courbe de température en fonction du temps et ladite courbe de pression en fonction du temps étant stockées dans un processeur de régulation du procédé de chauffage assisté par micro-ondes ;
(b) fournir de l'énergie micro-ondes à une cavité à micro-ondes ;
(c) détecter un premier signal dans un récipient à l'intérieur de la cavité à micro-ondes à un premier temps et fournir le premier signal au processeur, ledit premier signal étant l'un parmi une température et une pression ;
(d) lancer le profil de température en fonction du temps ou le profil de pression en fonction du temps et suivre le profil par une comparaison continue d'une valeur réelle et d'une valeur voulue et réguler le procédé de chauffage par un ajustement continu de l'énergie micro-ondes par le biais du processeur en fonction des mesures obtenues à partir des capteurs ; comprenant en plus l'étape consistant à
(e) détecter une substance chimique dans la cavité à micro-ondes et commuter la source d'énergie micro-ondes à un état au moins parmi "activé" et "désactivé" afin de l'aligner sur l'une parmi ladite courbe de température en fonction du temps et ladite courbe de pression en fonction du temps.

2. Méthode de régulation d'un procédé de chauffage programmé assisté par micro-ondes selon la revendication 1, dans laquelle ladite une parmi la courbe de température en fonction du temps et la courbe de pression en fonction du temps comprend une fonction non constante.

3. Méthode de régulation d'un procédé de chauffage programmé assisté par micro-ondes selon la revendication 1 ou la revendication 2, dans laquelle ladite une parmi la courbe de température en fonction du temps et la courbe de pression en fonction du temps comprend une courbe continue d'une première valeur à une deuxième autre valeur, chaque point entre la première valeur et la deuxième autre valeur ayant un temps associé et une valeur associée.

4. Méthode selon l'une quelconque des revendications 1 à 3, dans laquelle la température ou la pression est maintenue pendant une durée en ajustant l'énergie micro-ondes afin de maintenir la température ou la pression dans un récipient sans activer oú désactiver la source d'énergie micro-ondes.

5. Méthode selon l'une quelconque des revendications 1 à 4, dans laquelle une transition de l'une de la température et de la pression à une autre deuxième différente parmi une température et une pression s'effectue sur une durée en ajustant l'énergie micro-ondes de manière à obtenir une transition en douceur de ladite une parmi la température et la pression dans un récipient sans activer ou désactiver la source d'énergie micro-ondes.

6. Système à micro-ondes pour réguler un procédé de chauffage assisté par micro-ondes dans une cavité à micro-ondes comprenant :
(a) un processeur pour produire et stocker l'une parmi une courbe de température en fonction du temps et une courbe de pression en fonction du temps ;
(b) des moyens pour fournir une énergie micro-ondes à une cavité à micro-ondes ;
(c) un capteur pour détecter une parmi une température et une pression dans un récipient à l'intérieur de la cavité à micro-ondes ;
(d) des moyens pour détecter une substance chimique dans des gaz d'un processus chimique chauffé dans la cavité à micro-ondes ;
(e) un régulateur pour suivre le profil par une comparaison continue d'une valeur réelle et d'une valeur voulue et pour réguler le procédé de chauffage par un ajustement continu de l'énergie micro-ondes par le biais du processeur en fonction des mesures obtenues à partir du capteur et pour "activer" ou "désactiver" l'énergie micro-ondes lorsque la substance chimique est détectée dans des gaz d'un processus chimique chauffé par les moyens de détection de la substance chimique.
